# EUROPEAN PATENT APPLICATION

(11) **EP 2 023 297 A2**
(43) Date of publication of application: **11.02.2009**
(21) Application number: 08160754.1
(22) Date of filing: 18.07.2008
(51) Int. Cl.: G06T 15/70

(54) **Synthetic image automatic generation system and method thereof**

(30) Priority: 09.08.2007 TW 96129366
(71) Applicant: China Motor Corporation, Taoyuan Taiwan 326 (CN)
(72) Inventor: Kuo, Chung An, Taoyuan Taiwan 326 (TW); Kuo, Feng Chou, Taoyuan Taiwan 326 (TW); Chen, Pei-Chao, Taoyuan Taiwan 326 (TW); Wang, Mao-Jiun, Hsinchu Taiwan 30013 (TW); Kuo, Chien-Fu, Hsinchu Taiwan 30013 (TW); Lee, Hsu, Hsinchu Taiwan 30013 (TW); Chang, Shao-Wen, Hsinchu Taiwan 30013 (TW)
(74) Representative: Winter, Brandl, Fürniss, Hübner Röss, Kaiser, Polte Partnerschaft Patent- und Rechtsanwaltskanzlei

(57) **Abstract**

Provided is a computer system and a computerized method to automatically generate the synthetic images that simulate the human activities in a particular environment. The program instructions are input in the form of the natural language. Particular columns are provided in the user interface to allow the user to select desired instruction elements from sets of limited candidates. The instruction elements form the program instructions. The system analyzes the program instructions to obtain the standard predetermined time evaluation codes of the instructions. Parameters not include in the input program instructions are generated automatically. Synthetic images are generated by using the input program instructions and the parameters obtained.

## Description

### FIELD OF THE INVENTION

The present invention relates to a synthetic image automatic generation system and a method to automatically generate synthetic images using the system, especially to a system and a method to automatically generate the synthetic images that simulate the activities of the human body and, optionally, the motion of the related objects. The present invention provides a system and a method to automatically generate, according to the programming instructions written in the natural language, the synthetic images that simulate the motion of the human body and the related objects and to display the synthetic images in the display device of a computer system. In the present invention an interactive user interface is provided whereby the user may input the program instructions in an instinctive manner; the program instructions define the synthetic images for the motion of the human body and the related objects in a particular environment.

### BACKGROUND OF THE INVENTION

Thanks to the continuous enhancements in the operation speed of the computer system and the tremendous developments in the displaying technology, nowadays it is possible to utilize the computer system to generate all kinds of synthetic images in the displaying device. The motion simulation technology or the image synthesis technology has been widely used in a variety of applications, in order to generate simulation images in the computer displaying device for evaluation or amusements. Among the many applications the ergonomic evaluation is one of the important and newly developed applications of the image synthesis technology.

The ergonomic evaluation is the evaluation in the possible impacts to or costs in an operation, when the operation is performed by a human operator under certain psychological, biological and physical conditions. The ergonomic evaluation helps to design the proper production process or sequence of human activities, so to prevent the unexpected accidents in the human activities and to enhance the efficiency, the smoothness and the safety of the human activities.

Due to the technical limitations in the conventional art, the ergonomic evaluation in the production process of a new product is performed only at the stage immediately before the mass production of the new product. At this stage, however, the detailed designs of the product are pretty mature. Even if the results of the ergonomic evaluation may provide useful suggestions in modifying, for example, the manufacture process of the new product, the engineering changes so suggested would consume substantial costs and expenses. In some cases, the costs in changing the manufacture process would go higher than the development expenses.

The success in the computer aided design (CAD) technology and the interactive virtual reality evaluation technology has provided useful tools in the ergonomic evaluation technology. With the CAD tools and the interactive virtual reality evaluation software, nowadays the design engineers are able to evaluate the manufacture process at the initial stage of the product design, taking into consideration the particular environments in the manufacture and the individual differences of the operators. In the contemporary ergonomic evaluation technology the "digital human modeling" tool uses the computer to generate a series of images that simulate the activities of the human body and the motions of the related objects and to display the series of images in the display device. In order to enable the design engineers to simulate the operations of the operators in the production of the new product, several digital human modeling tools have been announced and provided in the market. One of the most popular digital human modeling products is the "DELMIA® eManufacturing Sytsem" provided by Dassault Systems.

Although these commercially available digital human modeling products are able to provide the artistic designs in the appearance of the simulation images, the detailed and smooth controls in the transformation of the image elements and the useful evaluations and the useful applications following the generation of the simulation images, they are not user-friendly. In other words, in order to generate the desired simulation images the digital human modeling tools require either the expensive synthetic image generating equipments in generating the synthetic images or the professional motion picture design engineers in designing the synthetic images. Nevertheless, in generating the qualified synthetic images the engineers would spend most of their time in the modifications and the fine tuning of the images after they are generated. As a result, most investments are spent in purchasing the expensive equipments and adjusting the generated images, mostly in the routine motions. In addition, in modifying the generated images the engineers do not have objective rules and standards to follow. They can only adjust the images according to their own experiences and knowledge. The resulted synthetic images are not standardized, thus not necessarily correct.

Nevertheless, most providers of the commercially available digital human modeling tooltool assume the users of the software are ergonomic experts, with full understanding in the structure of the human body, the factory layouts and the production technologies. Therefore, these tools require the user to input all control parameters in details before a series of motion images may be generated. It is thus impossible for those who don't have such knowledge to use these digital human modeling tools.

In the digital human modeling related technology, the "standard predetermined time evaluation" is an important step in the generation of the synthetic images. The synthetic images generated in the digital human modeling tool are a series of image that forms a section of the motion picture simulating the human activities in a particular environment. The evaluation of the standard predetermined time in the series of the synthetic images is necessary in generating the correct simulation motion images. In the field of the digital human modeling technology, the predetermined time evaluation systems provided by the Methods-Time Measurement Association (the MTM Association), including the MTM-1A, the MTM UAS and the Work Factor System, are well accepted as the standard predetermined time evaluation systems. In these standard time evaluation systems, the motions of the human body that would happen in an operation environment are classified into several types, according to their nature or attributes, and a standard predetermined time evaluation code is given to the respective types. However, in the application of the conventional digital human modeling tooltools the standard predetermined time evaluation codes are given to the type of motion by the users, according to their personal experiences and knowledge. Unnecessary discrepancy in the coding is thus created. In the existing digital human modeling products, no automatic standard predetermined time evaluation tools are provided.

It is thus necessary to provide a novel synthetic image automatic generation system to generate the synthetic images that simulate the activities of the human body and the motions of the related objects.

It is also necessary to provide a synthetic image automatic generation system that does not require particular knowledge in the ergonomic engineering in using the system.

It is also necessary to provide a synthetic image automatic generation system that is able to eliminate the discrepancy in the synthetic images generated due to the individual differences of the user.

It is also necessary to provide a synthetic image automatic generation system that generates the synthetic images directly according to the natural language instructions.

It is also necessary to provide a synthetic image automatic generation system that automatically provides the standard predetermined time evaluation codes according to the natural language instructions.

It is also necessary to provide a synthetic image automatic generation system that automatically determines the necessary parameters of the synthetic images that simulate the motions of the human body.

It is also necessary to provide a novel synthetic image generation method that automatically generates the synthetic images that simulate the motion of human body and the related objects in the above-mentioned systems.

### OBJECTIVE OF THE INVENTION

The objective of this invention is to provide a novel synthetic image automatic generation system to generate the synthetic images that simulate the motion of the human body and the related objects.

Another objective of this invention is to provide a synthetic image automatic generation system that does not require particular knowledge in the ergonomic engineering in using the system.

Another objective of this invention is to provide a synthetic image automatic generation system that is able to eliminate the discrepancy in the synthetic images generated due to the individual differences of the user.

Another objective of this invention is to provide a synthetic image automatic generation system that generates the synthetic images directly according to the natural language instructions.

Another objective of this invention is to provide a synthetic image automatic generation system that automatically provides the standard predetermined time evaluation codes according to the natural language instructions.

Another objective of this invention is to provide a synthetic image automatic generation system that automatically determines the necessary parameters of the synthetic images that simulate the motions of the human body.

Another objective of this invention is to provide a novel synthetic image generation method that automatically generates the synthetic images that simulate the motion of human body and the related objects in the above-mentioned systems.

### SUMMARY OF THE INVENTION

According to the present invention, a system and a method for the automatic generation of synthetic motion images that simulate the human activities are provided. The synthetic image automatic generation system of the present invention is used to generate the synthetic images that simulate the motions of the human body and the related objects, when certain operations are performed in a particular environment. The invented system generates the simulation images of the human activities automatically according to a series of instructions that are input by the user in the natural language and represent the human body or its parts, the activities of the human body, the objects relating to the activities and the interactions of the human body and the objects. The synthetic images so generated are displayed in the display device in connection with the invented system or a computer system installed with the digital human modeling tool.

According to one aspect of the present invention the synthetic image automatic generation system comprises an instruction editor, a simulation image generator and a database.

According to another aspect of the present invention the synthetic image automatic generation system comprises an instruction editor, an instruction translator and a database

The instruction editor provides an editing interface, allowing the user to input natural language instructions through the editing interface. The natural language instructions define the synthetic images that simulate the human activities, i.e., the motion of a human body and the related objects. In the embodiments of the present invention, the editing interface provides a column-selection mechanism, allowing the user to select the necessary motion elements that define the operator, the operation and/or the object in the order of: operator → operation → object → description of object → description of operator, to form the natural language instructions. In some embodiments of this invention, depending on the operational conditions of some types of the selectable operations, the freedom of selection in the columns is limited by providing to the user the possibility of selecting the other motion elements only from limited predetermined columns, when the type of the operation is first selected. The editing interface may also provide an editing column to allow the user to modify the existing natural language instructions. A series of the natural language instructions so input is included as a synthetic motion image file.

The instruction translator automatically converts the natural language instructions input by the user into the standard predetermined time evaluation codes of a particular standard predetermined time system, according to the nature or attributes of the motion defined by the natural language instructions. The standard predetermined time evaluation codes are provided to the digital human modeling tool as the bases in the generation of the simulation images. These codes are also provided to the user for reference purposes. The instruction translator comprises a variables interpreter, an error detection module and a standard unit time module.
The variables interpreter is used to convert the natural language instructions provided by the instruction editor into the standard predetermined time evaluation codes in the standard predetermined time evaluation system used in the digital human modeling tool, so that the time duration and time slot in generating the simulation images corresponding to the natural language instructions by the digital human modeling system may be determined. The error detection module is used to detect the errors in the natural language instructions input by the user. The standard unit time module provides a standard unit time to be used as the basis in determining the speed of the simulation motions.

The simulation image generator converts the natural language instructions into motion instructions executable in the digital human modeling tool. When the digital human modeling tool executes the motion instructions, a series of the synthetic images will be generated and displayed in the editing interface of the present invention or in the display device of another computer. The simulation image generator comprises a policy determination module and a simulation image generating module. The policy determination module determines the posture, orientation, motion type and speed, and other necessary parameters in generating the simulation images according to the attributes of the motion elements in the natural language instructions. The simulation image generating module refers to the parameters generated by the policy determination module and generates program instructions that are executable in particular digital human modeling tool, in order to generate synthetic images in the display device of the digital human model system.

The database comprises a synthetic motion image file storage section, a digital human modeling program storage section, a human body template database and an object template database. The synthetic motion image file storage section is used to save a plurality of the synthetic motion image files. The digital human model program storage section is used to store at least one digital human modeling tools. The human body template database is used to store a plurality of digital templates for the appearance of the human body or its parts and a plurality of motion image files that contain sections of the digital simulation images of the human body or the limbs. The object template database is used to store the digital templates for the appearance of a plurality of objects.

The synthetic image automatic generation method of the present invention generates the synthetic images that simulate the motion of the human body and the related objects in a computer system installed with a digital human modeling tool. The steps of the generation of the synthetic images include:
obtaining a set of natural language instructions, each instruction comprising the motion elements of at least a human body description, at least an object description and at least an operation description;
determining the attributes of motion elements contained in said natural language instruction;
generating according to the obtained attributes the motion policy information of the human body and the object in the operation, each motion policy information comprising the description of at least one selected from the group consisted of the posture and the orientation of the human body, the orientation of the object and the speed and path of the motion of the human body and the object;
generating motion instructions corresponding to the natural language instruction using the obtained motion policy information; and
executing the motion instruction in a digital human modeling tool to generate a synthetic image.

The invented method also provides the method of generating a plurality of synthetic images and using the plurality of synthetic images as key-frames to form a motion picture.

In another embodiment of the presently invented method, the steps of the generation of the synthetic images include:
obtaining a set of natural language instructions, each instruction comprising the motion elements of at least a human body description, at least an object description and at least an operation description;
determining the attributes of motion elements contained in said natural language instruction;
generating the standard predetermined time evaluation code of said natural language instruction in a particular standard predetermined time evaluation system according to the attributes so obtained;
providing a standard unit time;
generating motion instructions corresponding to the natural language instruction using the obtained standard predetermined time evaluation code; and
executing the motion instruction in a digital human modeling tool to generate a synthetic image.

In the embodiments of the present invention, the motion instructions generated comprise motion parameters executable in the digital human modeling tools, which are computer programs.

The system and method for the generation of synthetic images of this invention are not only useful in generating the synthetic motion images that simulate the human activities in an operation environment; they are useful in generating the simulation images in the motion pictures. The motions that the invented system and method may simulate are not limited to the motion of the human body. For example, the invented system and method may generate the synthetic images that simulate the motion of the animal or other objects. In addition, the present invention may be applied in the control of the humanoid robot, after minor necessary modifications.

These and other objective and advantages of the present invention may be clearly understood from the detailed description by referring to the following drawings.

### BRIEF DESCRIPTION OF THE DRAWINGS

Fig. I shows the block diagram of the synthetic image automatic generation system of this invention.
Fig. 2 shows the editing interface of the synthetic image automatic generation system of this invention.
Fig. 3 is the flowchart for the operations in the instruction editor of the invention.
Fig. 4 is the flowchart for the generation of the synthetic images by the simulation image generator of the invention.
Table I shows the motion elements used to describe the activities of the operators in an operation environment.
Table II shows the variables and their parameters that define the operations of the operators in a factory.

### DETAILED DESCRIPTION OF THE INVENTION

The present invention provides a synthetic image automatic generation system and method that automatically generate the synthetic images that simulate the human activities according to the natural language instructions. The present invention also provides the function of automatically generating the standard predetermined time evaluation codes for the natural language instructions. The present invention allows the user to input or modify the program instructions that define the motions of the human body and the related object in the form of the natural language and automatically generates the simulation images of the motions in a computer system installed with a digital human modeling application program, preferably a 3 dimensional digital human modeling tool. The invention provides to the user an editing interface, in which the user may create and modify a synthetic motion image file that contains a series of the natural language instructions. The present invention automatically converts the natural language instructions into the motion instructions that are executable in a particular digital human modeling tool. To create a synthetic motion image file, the user needs not to have the ability or knowledge in using the digital human modeling tool. The present invention makes the creation of the synthetic motion image file easy and natural.

While there are several digital human modeling tools useful in generating the synthetic images that simulate the motion of the human body and the related objects, the DELMIA® eManufacturing System provided by Dassault Systems provides useful planning and evaluation tools covering all the phases from the design to the production of a new product. This product may be used in the present invention as the digital human modeling tool. The contents of its design, application and functions are included herein for reference. In the followings, the present invention will be described by illustrating its embodiments using the DELMIA System as the digital human modeling tool, as an example. It shall be understood that other digital human modeling tools that provide the similar functions may also be used in the present invention.

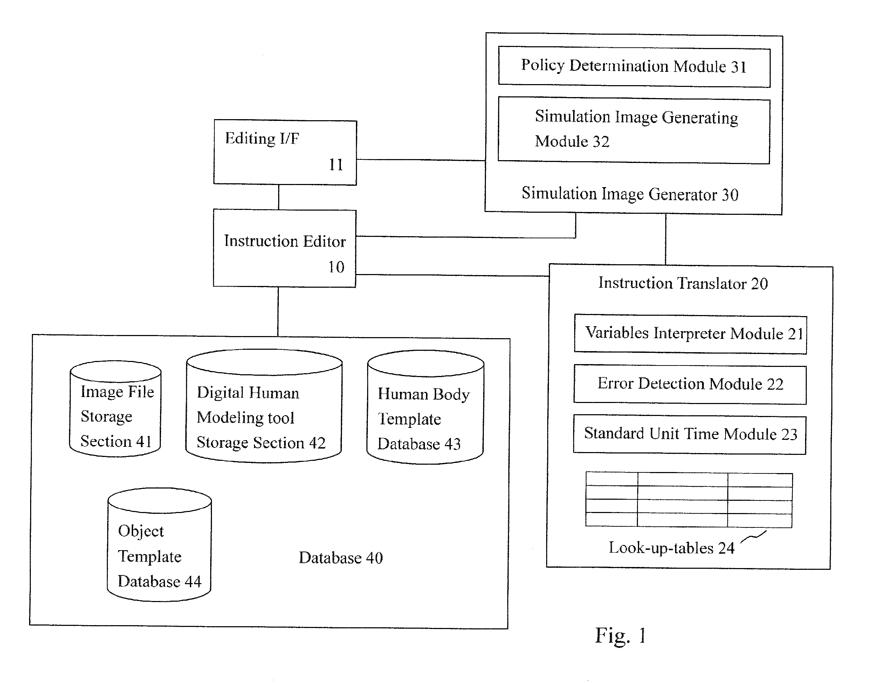

Fig. 1 shows the block diagram of the synthetic image automatic generation system of this invention. As shown in this figure, the synthetic image automatic generation system of this invention comprises: an instruction editor 10, an instruction translator 20, a simulation image generator 30 and a database 40. In them, the instruction editor 10 provides an editing interface 11, allowing the user to input natural language instructions through the editing interface 11. The natural language instructions define the synthetic images of the motion of a human body and the related objects when certain operations are performed in a particular environment. A series of the natural language instruction is collected as a synthetic motion image file. The instruction translator 20 automatically converts the natural language instructions into the standard predetermined time evaluation codes of a particular standard predetermined time system, according to the nature or attributes of the motion defined by the natural language instructions. The standard predetermined time evaluation codes are provided to a digital human modeling tool, to be used as a basis in the generation of the synthetic images. The simulation image generator 30 converts the natural language instructions into the motion instructions executable in the digital human modeling tool. When the digital human modeling tool executes the natural language instructions, a series of synthetic images that simulate the human activities will be generated and may be displayed in the editing interface or in the display device of another computer. In most cases, the motion instructions are motion parameters executable in the digital human modeling tool, which is always a computer program. The database 40 comprises a synthetic motion image file storage section 41, a digital human modeling tool storage section 42, a human body template database 43 and an object template database 44. The synthetic motion image file storage section 41 stores a plurality of the synthetic motion image file created by the user.
The digital human modeling tool storage section 42 stores at least one digital human modeling application program. The human body template database 43 is used to store a plurality of digital templates that define the appearance of the human body or its parts and a plurality of synthetic motion image files that contain the digital simulation images representing the motion of the human body or the limbs. The object template database 44 is used to store the digital templates of the appearance of a plurality of objects.

Also as shown in this figure, the instruction translator 20 comprises a variables interpreter module 21, an error detection module 22, a standard unit time module 23 and a plurality of look-up-tables 24. The variables interpreter 21 uses the look-up-tables 24 to convert the natural language instructions provided by the instruction editor 10 into the standard predetermined time evaluation codes under the standard predetermined time system used in the digital human modeling tool, so that the time duration and time slot in generating the simulation images corresponding to the natural language instructions by the digital human modeling system may be determined. The error detection module 22 detects the errors in the natural language instructions input by the user. The standard unit time module 23 provides a standard unit time to be used as the basis in determining the speed of the simulation motions. The look-up-tables 24 define the relationship between the motion elements of the natural language instructions and their corresponding variables that define the operational conditions of the operations denoted in the natural language instructions.

This figure also shows that the simulation image generator 30 comprises a policy determination module 31 and a simulation image generating module 32. The policy determination module 31 determines the motion policies, such as the posture, orientation, motion type and speed, and other necessary parameters of the human body and the related objects in generating the simulation images according to the attributes of the motion elements in the natural language instructions. The simulation image generating module 32 refers to the information provided by the policy determination module 31 and generates motion instructions that are executable in particular digital human modeling tools, in order to generate synthetic images in the display device of a computer that has installed a digital human modeling tool. The simulation image generating module 32 may use the human body templates stored in the human body template database 43 and the object templates stored in the object template database 44 to generate the synthetic images.

The structure, operations and functions of the modules will be described in the following.

### The instruction editor 10

The synthetic image automatic generation system of the present invention provides an editing interface 11 to allow the user to input into the synthetic image automatic generation system the natural language instructions that define the motion of the human body and the related objects, to describe an operation performed in a particular environment. The advantages of the use of the natural language instructions include that the user may describe the motion of the human body and the related objects in the operation in an intuitive manner and that the instructions so input may be easily understood by others and may be used directly in the human communication. The general concept of this invention is to create a tool with which the user may use the natural language instructions to form the program instructions or the instruction sentences. Several program instructions or instruction sentences form an instruction paragraph that describes a series of the continuous motion in the human activities.

Although it is not intended to limit the scope of this invention, the inventors found that the descriptions of the human activities in a particular environment, such as the operations of an operator in a factory, would include the identification of the operator, the description of the operation and the identification of the object in connection with the operation. In addition, depending on the nature of the operation, descriptions to the operator and/or the object may be needed. Moreover, the activities of a person in a particular environment are limited to certain types of routine operations. For example, the activities of an operator in a factory would include only the operations of: "fetch", "move", "operate", "put down", "inspect", "step forward" and "step aside." Table I shows the motion elements used to describe the activities of the operators in an operation environment. In this Table, the description to the "operator" is the name or the identification of an operator. The "operation" includes the above-mentioned 7 types of operation. The "object" is the target of the operation. The object is an object defined in the digital human modeling tool, such as a tool, a product or the parts of a product. The "description of object" denotes the second target of an operation. For example, in the operation of "put down", the "object" is the object being moved by the operator at the time of the "put down" operation and the "object description" is the object positioned at the location where the object being moved by the operator shall be put down. The "object description" is an object defined by the digital human modeling tool. As to the "operator description", it means the hand the operator uses in the operation; it may be the right hand, the left hand or the both hands. The "operator', the "operation", the "object", the "object description" and the "operator description" are called the "motion elements" of the natural language instructions in this invention.

**Table I**

| Operator | Operation | Object | Object description | Operator description |
|---|---|---|---|---|
| Operator name | Operate | First object | Second object | With the right hand |
| | Move | | | With the left hand |
| | Fetch | | | With both hands |
| | Put down | | | |
| | Inspect | | | |
| | Step forward | | | |
| | Step aside | | | |

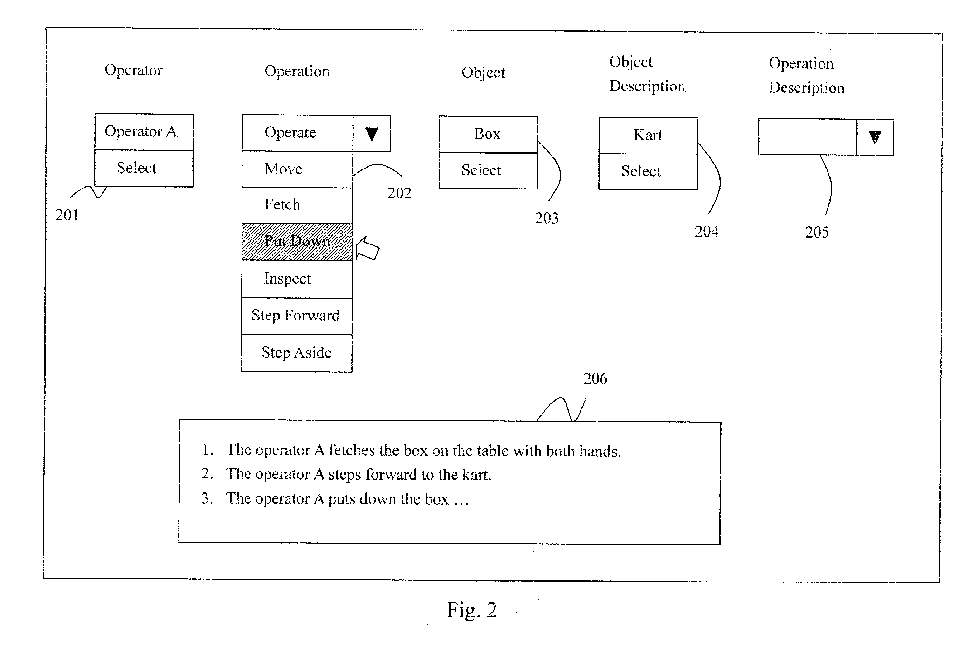

Fig. 2 shows one example of the editing interface 11 of the present invention. As shown in this figure, in the editing interface 11 of the present invention, several columns 201-205 corresponding to the categories of the motion elements are provided, allowing the user to select the desired motion elements from the selectable motion elements provided in the columns. The user is allowed to select the motion elements in a predetermined order. For example, the system may allow the user to select the motion elements in the order of "operator" → "operation" → "object" → "object description" → "operator description."

In such a case, as the first step the user selects the name or identification of the desired operator in an operation in the first column 201, the "operator" column. In response, the selectable operations are displayed in the second column 202, the "operation" column, whereby the user may select the desired operation in the column 202. Thereafter, the selectable objects are displayed in the third column 203, the "object" column. Depending on the nature of the selected operation, only the selectable columns are displayed following the selection of a previous column. For example, after the user selects the "operate", "fetch" or "inspect" operation, only the "object" column 203 and the "operator description" column 205 will be shown. The selectable objects are the targets of the operation, the fetching or the inspection, which may be a tool or one of the objects in the operation environment. The "operator description" column 205 provides the hand or hands that the operator uses to operate, fetch or inspect the object. On the other hand, after the user selects the "move" or "put down" operation, the selectable columns will be the "object" column 203, the "object description" column 204 and the "operator description" column 205. Here, the selectable elements in the "object description" column 204 will be the object positioned at the location where the selected object will be positioned or where the selected object will be moved to. When the user selects the "step forward" or "step aside" operation in the "operation" column 202, only the contents of the "object" column 203 will be shown. Here, the object means the object positioned at the location where the operator will move himself to.

Of course, the arrangements, limitations and order of selection as described above are not any technical restriction to the present invention. The selectable "operations" of the operator are not limited to the 7 types as described above. It is possible to use more or less than 7 types of the operations to define the possible activities of the operator. Those skilled in the art may determine the number, the type and the contents of the columns to obtain the same or similar results, in accordance with the needs in the application of the present invention.

The editing interface 11 as described above allows the user to describe the activity of the operator in an intuitive manner and provides a standard format in the description of the motions in the operator's activities. The program instructions generated by the present invention are in the standard form of "sentence," as in the natural language system. The instruction sentences input by the users are in uniformity; the discrepancies in the instruction sentences input by different writers (users) may thus be avoided.

When the user inputs a program instruction or an instruction sentence in the editing interface 11, the instruction editor 10 records the input instruction. The record of a series of the input instructions or instruction sentences forms the description of a series of operations. These instruction sentences form a computer program based on which the images of a continuous motion will be generated. For example, when the user selects from the columns the following motion elements: "Operator A", "fetch", "box", "table" and "with both hands," the following instruction sentence is recorded:
"The operator A fetches the box on the table with both hands."
The user then selects the following motion elements: "Operator A", "step forward" and "kart." As the results of the selections, the following instruction sentence is recorded:
   "The operator A steps forward to the kart."
   Then the user selects the following motion elements: "Operator A", "put down", "box", "cart" and "with both hands." As the results of the selections, the following instruction sentence is recorded:
      "The operator A puts down the box in the kart with both hands."

As a result, the description of the activities of Operator A that contains 3 instruction sentences is recorded. The instructions as recorded are in the natural language and are easy to understand by all persons. In addition, since the attributes of the motion elements have been contained in the instruction sentences, the program instructions may be easily translated into the program instructions to be executed in the digital human modeling tool executed in a computer system.

To be more specific, in the present invention the attributes of the motion elements are defined by the columns 201-205 of the editing interface 11. The elements in the instruction sentence may be easily identified, in their attributes, as an operator, an operation or an object. The objects contained in the instruction sentence correspond to the digital objects defined in the digital human modeling tool. The descriptions of the corresponding digital objects may be found in the files in connection with the digital human modeling tool. As a result, all instruction sentences are sufficient to describe the motions of the digital human body and the digital objects in the related operations.

The order of the motion elements in an instruction sentence may differ from one natural language to another. A natural language element order converting technology may help to change the order of the motion elements, in order to make the obtained instruction sentence comprehensive to the user of a particular natural language.

In one embodiment of the present invention, an editing window 206 is provided in the editing interface 11. In the editing window 206, the motion instruction sentences as recorded may be displayed in their orders. This editing window 206 allows the user to modify the contents, the parameters and the orders of the instruction sentences. The editing may be implemented in a document processing software or by copying a sentence into the input columns 201-205 in the editing interface 11 for edition. The series of the instruction sentences is given a file name and saved as a synthetic motion image file. A synthetic motion image file in the natural language is thus obtained. The file may be provided to the instruction translator 20 for conversion or to other persons for reference. The technology in the editing, modification and composition of the instruction sentences are known to those skilled in the art. Detailed descriptions thereof are thus omitted.

### Instruction translator 20

As described above, the instruction translator 20 of the present invention includes a variables interpreter module 21, an error detection module 22, a standard unit time module 23 and a plurality of look-up-tables 24. The variables interpreter module 21 converts the natural language instructions input from the instruction editor 10 into their corresponding codes under the standard predetermined time evaluation system used in a particular digital human modeling tool by using the plurality of look-up-table 24. The error detection module 22 detects the errors in the input natural language instructions and generates alarm messages to remind the user to correct the errors. The error detection module 22 may also identify instructions that have the sequential relationship and define them as a group. The standard unit time module 23 provides a standard unit time in determining the speed of the operations in the natural language instructions. The plurality of look-up-tables 24 defines at least the relationship between the motion elements of the natural language instructions and the corresponding variables that define the operational conditions of the operation. The block diagram of the instruction translator 20 is shown in Fig. 1.

The instruction translator 20 is used to automatically convert the natural language instructions or the instruction sentences provided by the instruction editor 10 into the standard predetermined time evaluation codes under the standard predetermined time evaluation system used in the digital human modeling tool. The evaluation codes are provided to the digital human modeling tool as the bases in the generation of the simulation images for the motion of the human body and the related objects. In such conversion the processing involved includes the identification in the attributes and the determination of the parameters of the motion elements, the establishment of the standard unit time and the detection of errors in the instruction sentences.

The purpose of the identification in the attributes and the determination of the parameters of the operations by the variables interpreter module 21 is to establish the corresponding relationship between the input natural language instructions and the representative codes specified in the digital human modeling tool. Although it is not intended to limit the scope of this invention by any theory, the inventors have found that almost all activities of the operators in a particular operation environment may be defined by a limited number of the operations defined in the commercially available digital human modeling tool. Therefore, the activities that may be found in a particular environment may be analyzed and classified, thus defined by a limited number of operations, attributes and parameters.

Take the activities of the operators in a factory as an example. In order to define all or almost all the activities of the operators in a factory, the variables shown in Table II may be used. Table II shows the variables and their parameters that define the activities of operators in the operations in a factory.

**Table II**

| (M) Operation | (H) Hand or hands used | (T) Attribute of objects | (C) Status 1 | (S) Status 2 | Coordinat es |
|---|---|---|---|---|---|
| A. fetch | R. right hand | R. tool | A. type 1 | A. type 1 | Provided by the digital human modeling tool |
| B. put down | L. left hand | P. object | B. type 2 | B. type 2 | |
| C. operate | B. both hands | N. no input | C. type 3 | C. type 3 | |
| D. manual motion | N. no input | | N. no input | N. no input | |
| E. bodily motion | | | | | |
| N. no input | | | | | |

As shown in Table II, the most common activities of the operators in a factory are "fetch", "put down" and "operate." Other activities may be defined as a "manual motion" or a "bodily motion." In other words, in a synthetic image generating system used to generate the simulation images for the activities of the operators in a factory, all the desired simulation images may be defined by using the above-mentioned 5 operations. Of course, it is possible to use more than 5 kinds of operations to define the activities of the operators. For example, it is possible to use the operations of "walk" and "observe" in addition to the 5 operations. It is also possible to use less than 5 kinds of operations. For example, replace the "operate" operation with the "manual motion" operation. The number of the operations is not any technical limitation in this invention.

Nevertheless, in using the natural language instructions to generate the simulation images of the operator and the object, it is necessary to define certain conditions of the operations. For example, the hand or hands the operator uses in the operation, as the right hand, the left hand, the both hands or with no hand, shall be defined. The attribute of the object in connection with the operation, as a tool or as an ordinary object, shall be defined, too. Other necessary attributes include the weight (mass) of the object, the weight classes of the motion etc. The necessary variables in defining the operational conditions may be determined according to the applicable standard predetermined time evaluation systems, or determined by the provider of the synthetic image automatic generation system, according to the actual needs in the application.

A plurality of look-up-tables 24 is prepared. The contents of the took-up-tables 24 reflect the relations between the motion elements of the natural language instructions and the corresponding variables in the operational conditions. Therefore, the variables interpreter module 21 may easily convert the natural language instructions into the corresponding codes under the standard predetermined time evaluation system used in the digital human modeling tool. For example, to convert the natural language instruction of "The operator A fetches the box on the table with both hands" into its corresponding standard predetermined time evaluation code under the above-said MTM-UAS standard predetermined evaluation time system, the following steps may be used:
From the columns of the motion elements of the natural language instruction, the "operation" variable (the M variable) in this natural language instruction shall have the value of A. The values for the H variable shall be B and for the T variable, P. As to the status variables, the values for "status 1" is A (e.g., less than 2 lbs) and for "status 2" is A (e.g., ordinarily). The coordinates of the object (the box) may be provided by the digital human modeling tool.

Therefore, we have the series of values in these variables, as follows: A BPAAXYZ, wherein XYZ are the representative coordinates of the box in the X, Y and Z axes.

In addition, in the example of the above-described natural language instruction: "The operator A steps forward to the kart," the values of the variables obtained after the conversion are: ENNAAXYZ. Here, the XYZ are the coordinates of the kart.

In the example of the above-described natural language instruction "The operator A puts down the box in the kart with both hands," the values of the variables obtained after the conversion are: BBPAAXYZ.

In the above examples, the values of the variables are determined according to the definitions provided in the MTM-UAS system. Therefore, the results of the instruction translation are the so-called MTM-UAS codes or the UAS codes. Under the MTM-UAS system, each set of the UAS codes is consisted of three parts. The first part is the unit name denoting the operation and is represented by one letter of the English alphabet. The second part is the condition of the operation, represented by one letter of the English alphabet. The third part is the scope of the reachable area of the operation, represented by one value. The UAS codes and their definitions may be referred to the MTM-UAS Standards Manual. Detailed descriptions thereof are thus omitted.

Under the above-described system, in the example of the instruction of "The operator A fetches the box on the table with both hands" the UAS codes may be automatically obtained as follows: From the values of the M, H and T variables the first UAS code representing the unit name is obtained. From the values of the C and S variables the second UAS code representing the condition of the operation is obtained. From the digital human modeling tool the third UAS code may be calculated.

After the process as described above, by using the look-up-tables 24 of the present invention, the natural language instructions as input by the user may be converted into the applicable codes defined under the applicable standard predetermined time evaluation system. As described above, the codes shown in the above examples are determined under the MTM-UAS system. If a different standard predetermined time evaluation system is used, the contents of the look-up-tables 24 and the conversion mechanism may be adjusted or modified accordingly. However, such adjustments and modifications may be realized by those skilled in the art. Detailed descriptions thereof are thus omitted.

Although the motion elements as described above may be used to describe almost all activities of the operators in a particular environment, the natural language instructions may include errors, due to the user's misunderstandings in the definitions and the syntax of the motion elements or the mistakes in inputting the instructions. As the results of the error, the simulation images of the operations can not be generated or correctly generated. An error detection module 22 is thus prepared in the present invention, to detect and to remind the user to correct the errors in the natural language instructions.

In the error detection module 22 of the present invention, the errors to be detected include, but are not limited to: When the user inputs the instruction of "put down," the error detection module 22 determines if a "fetch" instruction relating to the same object has been previously input? If not, the error detection module 22 generates an alarm message to remind the user to input a "fetch" instruction. After the user inputs a "fetch" instruction, if no "operate" or "put down" instruction is input, the error detection module 22 generates an alarm message to remind the user to input such instructions. When a "put down" instruction is in conflict with a previous "fetch" instruction, such as in the case where the description in the "hand or hands used" variable is in conflict, the error detection module 22 generates an alarm message to remind the user to correct. In addition, the series of operations of "fetching an object, operating, observing or moving the object and putting down the object" is the most frequently found activity in the factory or other environment. A logic detecting element is provided in the error detection module 22, to mate the corresponding "fetch" and "put down" instructions. For example, it is possible to mate a "put down" instruction with a previous "fetch" instruction, if they use the same hand. In such a case, if another instruction relating to the same hand exists between the two instructions and the M variable is not D, the three instructions are determined a group of "operating a tool" instructions. Otherwise, the two instructions are determined a group of the "fetch and put down" instructions.

Last but not least, the instruction translator 20 further provides a standard unit time module 23. The standard unit time module 23 in this invention provides the standard unit time to determine the speed of the motions in the synthetic images. The instruction translator 20 analyzes the input series instructions and provides a time duration value to the series instructions based on the standard unit time provided by the standard unit time module 23. In the application of the present invention, it is possible to use the intervals between each frame of the images to be displayed in the display device as the standard unit time. In other words, in the example where the display device displays 30 frames a second, the standard unit time may be set to one thirties (1/30) seconds. The length of the standard unit time is not any technical limitation of this invention. The time duration of an operation may be calculated according to the standard unit time provided by the standard unit time module 23 and the distance between the digital human body or the digital object and another digital object.

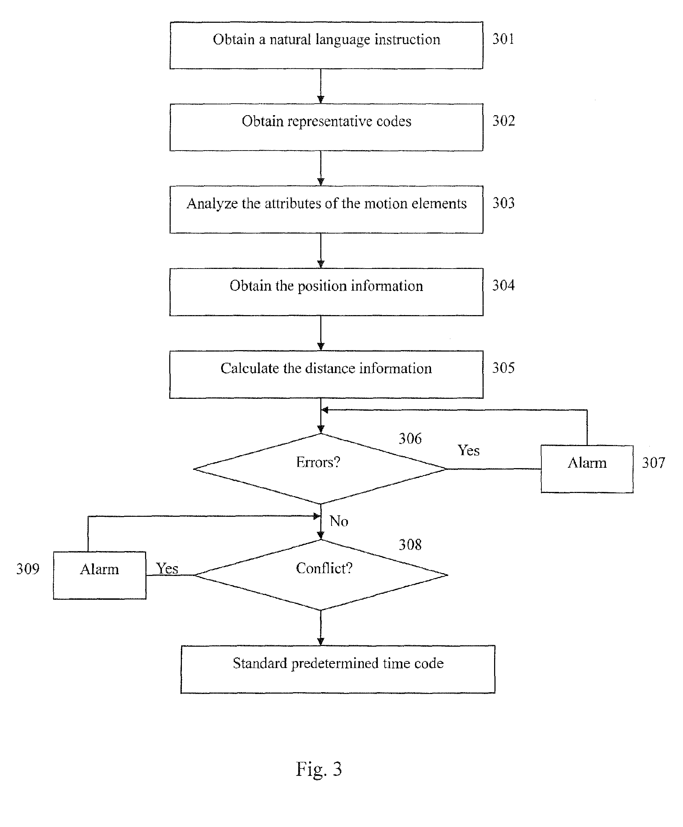

Fig. 3 is the flowchart for the conversion of the natural language instruction in the instruction translator 20. In the flow hart, the steps in the automatic conversion of a natural language instruction into its corresponding standard predetermined time evaluation codes under the standard predetermined time evaluation system are shown. As shown in this figure, at 301 the instruction translator 20 obtains a natural language instruction. At 302 the variables interpreter module 21 obtains the corresponding code denoting the operation in the obtained natural language instruction under the standard predetermined time evaluation system from the look-up-tables 24. At 303 the variables interpreter module 21 analyzes the attributes of the motion elements in the natural language instruction to obtain the codes denoting the operational conditions of the natural language instruction under the standard predetermined time evaluation system. At 304 the variables interpreter module 21 obtains the position information, such as the coordinates, of the object(s) from the digital human modeling tool. At 305 the variables interpreter module 21 uses the position information to calculate the distance information needed in the operation of the natural language instruction and obtains the code denoting the range of the distance under the standard predetermined time evaluation system. At 306 the error detection module 22 detects the errors, such as the logic errors and the syntax errors, in the natural language instruction. If an error is found, at 307 the error detection module 22 generates an alarm message to remind the user to correct and the process goes back to step 306. If no error is found, at 308 the error detection module 22 determines if the input natural language instruction is in conflict with other instructions. If yes, at 309 the error detection module 22 generates an alarm message to remind the user to correct and the process goes back to step 308. Otherwise, at 310 the codes generated in steps 302, 303 and 305 are collected as the standard predetermined time evaluation codes and are output. The codes may be used by the digital human modeling tool to generate a simulation image defined by the natural language instruction.

As shown above, the instruction translator 20 efficiently and correctly converts the natural language instructions into the representative codes under the standard predetermined time system used in the digital human modeling tool.

### Simulation image generator 30

As may be understood from the previous descriptions, the natural language instruction or the instruction sentence generated by the instruction editor 10 contains only the partial descriptions of the synthetic images to be generated. They are not sufficient to describe the synthetic images in full. For example, most motion instructions such as "fetch", "operate" and "put down" describe the motion of the upper limb of the human body only. The object or tool denoted by these instructions may be positioned in different locations in the space as defined in the digital human modeling tool. Therefore, to complete the operation the operator needs to step toward the object or tool, bend or kneel down to reach the object or the tool. To fully describe the activities of the operator, the descriptions of these additional motion parameters are necessary. In the conventional art the user needs to define all the details of these motion parameters, including the direction and the path of the movement of the operator and the object, the orientation and the posture of the operator and other parameters to define the motion. Without such information, the digital human modeling tool can not generate the correct synthetic images. Although it is not intended to limit the scope of this invention, the present invention uses the following steps to automatically generate the necessary parameters to describe the motions of the human body and the related objects that are not described in the natural language instructions input by the user: Generating the basic image, generating the motion policy information and modification of the basic image.

As shown in Fig. 1 and as described above, the simulation image generator 30 of this invention includes a policy determination module 31 and a simulation image generating module 32. The policy determination module 31 determines the motion policies of the synthetic images, such as the posture, orientation, motion type and speed, path of motion and other necessary parameters (collectively as the "motion policy" or the "motion policy information" hereinafter) of the digital human body and the digital objects in the synthetic images according to the attributes of the motion elements in the natural language instructions. The simulation image generating module 32 uses the motion elements and the motion policy information provided by the policy determination module 31 to generate the motion instructions that may be executed in particular digital human modeling tool, in order to generate synthetic images in a display device. The simulation image generating module 32 may use the human body templates stored in the human body template database 43 and the object templates stored in the object template database 44 to generate the synthetic images.

In addition to the above-mentioned elements, it is possible to provide a motion element-to-motion instruction table 33 to define the relationship of the motion elements in the natural language instructions and the motion instructions or motion parameters executable under the digital human modeling tool, so to facilitate the simulation image generating module 32 to generate the basic image or the final simulation images. In the table 33, each operation of the motion element corresponds to one or a group of the motion instructions of the digital human modeling tool. The basic image so generated will be used as the bases of the resulted image.

In the present invention, the "motion policy information" includes a wide variety of parameters that is necessary in defining the synthetic image but is not included in the natural language instruction as input by the user. The motion policy information may include descriptions in: The type, path and speed of the motion of the digital human body and the digital object, the position the digital human body and the digital objects shall locate, the orientation of the digital human body and the objects, the posture of the digital human body or its limbs. The policy determination module 31 analyzes the attributes of the natural language instructions and defines the motion policy of the instructions. The simulation image generating module 32 uses the motion policy information to modify the basic images to obtain the desired synthetic images. In the embodiments of the present invention, it is possible to use the "operational policy" to determine a part of the motion policy. In such embodiments, three types of the operational policy are provided: The concentration policy, the non-concentration policy and the user-defined policy. In the embodiments of this invention, the policy determination module 31 uses the position of the "interactive points" defined in the natural language instructions and the information provided in the digital human modeling tool in correspondence with the interactive points to automatically determine the operational policy of the operations.

In another embodiment, a "reach envelop model" is established based on the information provided in the anthropometrics database of the Taiwanese people. The reach envelop model is used in the determination of the posture of the digital human body in performing a particular operation. In the reach envelop model the maximum comfortable reach line of a person in various body sizes is determined by taking into considerations the height of the person and other parameters. When the digital human body is instructed to reach an object at a certain height, the digital human body is moved to a position, whereby the object locates inside the maximum comfortable reach line of the digital human body as defined in the reach envelop model. The posture of the digital human body is then determined according to the height of the horizontal plain where the object is positioned and the bend/squat height defined in the reach envelop model. If the object is positioned between the bend height and the squat height, the posture of the digital human body in performing the operation shall be "bending without squatting." If the object is position in a height under the squat height, the digital human body shall squat to perform the operation.

The position and the orientation of the digital human body in performing a particular operation may be determined according to the operational policy of the operation, as follows:
1. The concentration policy: In performing the operation such as mounting a bolt, the operator must operate facing the bolt from a particular direction. The operational policy of such an operation is defined as the "concentration policy" in the policy determination module 31. When the policy determination module 31 determines an operation to be in the concentration policy, the simulation image generating module 32 will move the operator to the particular predetermined position and turn the face of the operator to a particular predetermined direction.
   The concentration policy does not only determine the possture of the digital human body in an operation at a fixed position. It also determines the path of movement of the digital human body. In the concentration policy, the digital human body moves itself by turning the body → stepping forward → turning the body to face the target. In such an operation, for any targeted object there is an only operational position for the digital human body. This operational position is the stop point of the movement of the digital human body, no matter where the start point is. This operational point may be determined by using the interactive tag defined in the digital human body model and the digital object model provided in the digital human modeling tool and the attributes of the natural language instruction.
2. The non-concentration policy: The non-concentration policy is also called the intermediate operation. For example, in putting down an object, it is not necessary for the operator to operate at a specific position and facing a specific direction. The non-concentration policy also determines the path of movement of the operator. In the non-concentration policy the digital human body moves itself by turning the body and stepping forward. The stop point is one step before the targeted object at the line connecting the targeted object and the start point.
3. User-defined policy: Under the user-defined policy all parameters used in the concentration policy and in the non-concentration policy may be selectively used by the user. The parameters specified in this policy may include, for example, the pace of the operator, whether the operator is required to walk efficiently etc.

Since the reach envelop model is designed according to the local anthropometric database, the maximum comfortable reach line may not apply to all people. In the present invention the simulation image generator 30 provides the adjustment function, whereby the height of the digital human body and the length of its parts may be adjusted. Such function may be realized by using the existing functionalities provided in the commercially available digital human modeling tool. Detailed descriptions thereof are thus omitted.

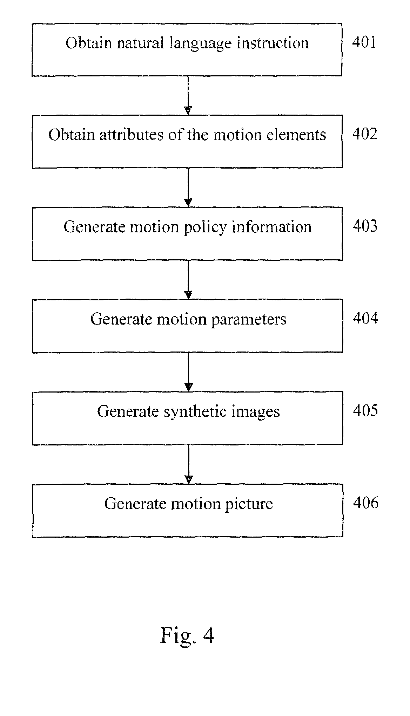

Fig. 4 shows the flowchart in the generation of the simulation images by the simulation image generator 30. As shown in this figure, in generating the simulation images, at 401 the simulation image generator 30 obtains a set of natural language instructions. Each instruction includes the motion elements of at least a human body description, at least an object description and at least an operation description. At 402 the policy determination module 31 determines the attributes of motion elements contained in said natural language instruction. The attribute information may be obtained according to the column of the motion elements. At 403 the policy determination module 31 generates the motion policy information of the human body and the object in the operation according to the obtained attributes. The motion policy information defines at least one of the descriptions in the posture and the orientation of the human body, the orientation of the object and the speed and path of the motion of the human body and the object. At 404 the simulation image generating module 32 uses the obtained motion policy information to generate the motion instructions of the natural language instruction. The motion instructions are mostly motion parameters and are executable in a digital human modeling tool. At 405 the digital human modeling tool executes the motion instructions to generate a series of synthetic images. At 406 the simulation image generator 30 uses the generated synthetic images as the key-frames to generate a motion picture.

### Effects of the Invention

In the present invention the program instructions input by the user are the natural language instructions. No special training to the user is needed in creating the synthetic images. The program instructions in this invention have a uniformed format. The discrepancy in the programming due to the individual differences of the programmers is thus avoided. The standard predetermined time evaluation codes generated in the present invention are standardized. The users may concentrate themselves in modifying the production process or the conditions in the working place.

The present invention produces both the spatial information and the temporal information in the simulation of the human activities. It provides useful information in the application and the evaluation in the ergonomic engineering, the work process design and the production line design.

As the present invention has been shown and described with reference to preferred embodiments thereof, those skilled in the art will recognize that the above and other changes may be made therein without departing form the spirit and scope of the invention.

## Claims

1. A synthetic image automatic generation system, comprising:
an instruction editor to provide an editing interface allowing the user to input natural language instructions defining a series of synthetic images that simulate the motion of a human body;
a simulation image generator to translate said input natural language instructions into motion instructions executable in particular digital human modeling computer program; and
a database, including a simulation image file storage section to store a plurality of simulation image files comprising a series of natural language instructions and a digital human modeling computer program storage section to store at least one digital human modeling computer program;
wherein said simulation image generator comprises a policy determination module and a simulation image generating module; wherein said policy determination module generates according to attributes of elements of said natural language instructions parameters relating to said motion; said parameters comprising at least one selected from the group consisted of position, posture and orientation of said human body and type of motion of said human body and
wherein said simulation image generating module uses said natural language instructions and said parameters generated by said policy determination module to generate said motion instructions.

2. The synthetic image automatic generation system according to claim 1, wherein said natural language instruction comprises the descriptions of at least one operator, at least one operation and at least one object.

3. The synthetic image automatic generation system according to claim 2, wherein said natural language instruction further comprises descriptions in the conditions of said operation.

4. The synthetic image automatic generation system according to claim 2, wherein said editing interface provides selection columns allowing the user to select said operator, said operation and said object from a limited number of candidate operators, candidate operations and candidate objects.

5. The synthetic image automatic generation system according to claim 3, wherein said editing interface provides a selection column allowing the user to select said operator, said operation, said object and said conditions of operation from a limited number of candidate operators, candidate operations, candidate objects and candidate conditions.

6. The synthetic image automatic generation system according to claim 4, wherein said candidate operations comprise a plurality of operations to be performed by operators in the operation environment.

7. The synthetic image automatic generation system according to claim 6, wherein said candidate operations comprise a plurality of upper limb operations to be performed by operators in the operation environment.

8. The synthetic image automatic generation system according to claim 4, wherein said editing interface provides selection columns allowing the user to select in sequence said operator, said operation and said object from a limited number of candidate operators, candidate operations and candidate objects.

9. The synthetic image automatic generation system according to claim 5, wherein said editing interface provides selection columns allowing the user to select in sequence said operator, said operation, said object and said conditions from a limited number of candidate operators, candidate operations, candidate objects and candidate conditions.

10. The synthetic image automatic generation system according to claim 1, wherein said editing interface further provides an editing window to display at least one input natural language instruction and allows the user to modify contents of said natural language instruction and to change sequence of natural language instructions.

11. The synthetic image automatic generation system according to claim 1, wherein said policy determination module determines posture and position of said human body in particular time points according to a reach envelop model.

12. The synthetic image automatic generation system according to claim 11, wherein said policy determination module determines said posture and position according to a maximum comfortable reach line defined in said a reach envelop model.

13. The synthetic image automatic generation system according to claim 2, wherein said policy determination module determines posture and position of said human body in particular time points according to an operational policy selected from the group consisted of a concentration policy and a non-concentration policy and determined according to contents of said natural language instruction; wherein said concentration policy requires said operator to perform said operation from a predetermined position facing a predetermined direction.

14. The synthetic image automatic generation system according to claim 2, wherein said policy determination module determines a path of motion of said human body in said operation according to an operational policy selected from the group consisted of a concentration policy and a non-concentration policy and determined according to contents of said natural language instruction; wherein said concentration policy requires said operator to perform said operation from a predetermined position facing a predetermined direction.

15. The synthetic image automatic generation system according to claim 14, wherein path of motion of said human body of said concentration policy determined by said policy determination module comprises the motions of turning said human body, moving said human body forward and turning said human body to face an object.

16. The synthetic image automatic generation system according to claim 14, wherein path of motion of said human body of said non-concentration policy determined by said policy determination module comprises the motions of turning said human body and moving said human body to an object.

17. The synthetic image automatic generation system according to claim 1, further comprising an error detection module to detect errors contained in said natural language instruction.

18. A synthetic image automatic generation system, comprising:
an instruction editor to provide an editing interface allowing the user to input natural language instructions defining a series of synthetic images that simulate the motion of a human body; and
an instruction translator to convert said input natural language instructions into codes defined in a standard predetermined time evaluation system to be used in a digital human modeling computer program in the generation of said synthetic images;
wherein said instruction translator comprises a variables translator; wherein said variable translator uses a look-up-table to convert said input natural language instructions into said standard predetermined time evaluation code according to attribute information contained in said natural language instruction.

19. The synthetic image automatic generation system according to claim 18, wherein said natural language instruction comprises the descriptions of at least one operator, at least one operation and at least one object.

20. The synthetic image automatic generation system according to claim 19, wherein said natural language instruction further comprises descriptions in the conditions of said operation.

21. The synthetic image automatic generation system according to claim 19, wherein said editing interface provides selection columns allowing the user to select said operator, said operation and said object from a limited number of candidate operators, candidate operations and candidate objects.

22. The synthetic image automatic generation system according to claim 20, wherein said editing interface provides a selection column allowing the user to select said operator, said operation, said object and said conditions of operation from a limited number of candidate operators, candidate operations, candidate objects and candidate conditions.

23. The synthetic image automatic generation system according to claim 21, wherein said candidate operations comprise a plurality of operations to be performed by operators in the operation environment.

24. The synthetic image automatic generation system according to claim 23, wherein said candidate operations comprise a plurality of upper limb operations to be performed by operators in the operation environment.

25. The synthetic image automatic generation system according to claim 21, wherein said editing interface provides selection columns allowing the user to select in sequence said operator, said operation and said object from a limited number of candidate operators, candidate operations and candidate objects.

26. The synthetic image automatic generation system according to claim 22, wherein said editing interface provides selection columns allowing the user to select in sequence said operator, said operation, said object and said conditions from a limited number of candidate operators, candidate operations, candidate objects and candidate conditions.

27. The synthetic image automatic generation system according to claim 18, wherein said editing interface further provides an editing window to display at least one input natural language instruction and allows the user to modify contents of said natural language instruction and to change sequence of natural language instructions.

28. The synthetic image automatic generation system according to claim 18, further comprising an error detection module to detect errors contained in said natural language instruction.

29. A method for the automatic generation of synthetic images, comprising the steps of:
obtaining a set of natural language instructions from an editing interface of a computer system; each instruction comprising the motion elements of at least a human body description, at least an object description and at least an operation description
determining attributes of said motion elements contained in said natural language instruction;
generating motion parameters of said human body in said operation according to said obtained attribute information; said motion parameters comprising information defining at least one selected from the group consisted of position, posture and orientation of said human body in said operation and speed and path of the motion of said human body in said operation;
generating motion instructions executable in a digital human modeling computer program according to said natural language instruction and said motion parameters; and
executing said motion instructions in said digital human modeling computer program to generate a series of synthetic images.

30. The method for the automatic generation of synthetic images according to claim 29, wherein said attributes of said motion elements are determined according to information provided in columns defined in said editing interface.

31. The method for the automatic generation of synthetic images according to claim 29, wherein position and posture of said human body is determined by using a reach envelop model.

32. The method for the automatic generation of synthetic images according to claim 31, wherein position and posture of said human body is determined according to a maximum comfortable reach line defined in said reach envelop model.

33. The method for the automatic generation of synthetic images according to claim 29, wherein posture and position of said human body in particular time points are determined according to an operational policy selected from the group consisted of a concentration policy and a non-concentration policy and determined according to contents of said natural language instruction; wherein said concentration policy requires said operator to perform said operation from a predetermined position facing a predetermined direction.

34. The method for the automatic generation of synthetic images according to claim 29, wherein a path of motion of said human body in said operation is determined according to an operational policy selected from the group consisted of a concentration policy and a non-concentration policy and determined according to contents of said natural language instruction; wherein said concentration policy requires said operator to perform said operation from a predetermined position facing a predetermined direction.

35. The method for the automatic generation of synthetic images according to claim 34, wherein said path of motion of said human body in said concentration policy comprises the motions of turning said human body, moving said human body forward and turning said human body to face an object.

36. The method for the automatic generation of synthetic images according to claim 34, wherein said path of motion of said human body in said non-concentration policy comprises the motions of turning said human body and moving said human body to an object.

37. The method for the automatic generation of synthetic images according to claim 34, further comprising the step of using said generated images as key-frames to generate intermediate images between each pair of two key-frames.

38. The method for the automatic generation of synthetic images according to claim 34, wherein said intermediate images are generated by interpolation.

39. The method for the automatic generation of synthetic images according to claim 29, further comprising the step of detecting errors in said input natural language instructions.

40. A method for the automatic generation of synthetic images, comprising the steps of:
obtaining a set of natural language instructions from an editing interface of a computer system; each instruction comprising the motion elements of at least a human body description, at least an object description and at least an operation description
obtaining in a look-up-table operation codes of said operation description in natural language instructions; said look-up-table defining corresponding relations between said motion elements and codes defined in a standard predetermination time evaluation system;
obtaining from said look-up-table operational condition codes of said motion elements in said standard predetermined time evaluation system according attributes of said motion elements; said attributes being determined according to attribute information defined in columns provided in said editing interface; obtaining position information of said human body and said object from a digital human modeling computer program;
calculating to obtain distance information using said position information;
obtaining from said look-up-table distance codes corresponding said distance information in said standard predetermined time evaluation system;
outputting said operation codes, said operational condition codes and said distance codes as the standard predetermined time evaluation codes.

41. The method for the automatic generation of synthetic images according to claim 40, further comprising the step of executing said standard predetermined time evaluation codes in said digital human modeling computer program to generate synthetic images.

42. The method for the automatic generation of synthetic images according to claim 41, further comprising the step of using said generated images as key-frames to generate intermediate images between each pair of two key-frames.

43. The method for the automatic generation of synthetic images according to claim 42, wherein said intermediate images are generated by interpolation.

44. The method for the automatic generation of synthetic images according to claim 39, further comprising the step of detecting errors in said input natural language instructions.
